# EUROPÄISCHE PATENTSCHRIFT

(11) **EP 2 337 977 B1**
(45) Veröffentlichungstag und Bekanntmachung des Hinweises auf die Patenterteilung: **11.07.2012**
(21) Anmeldenummer: 09783536.7
(22) Anmeldetag: 29.09.2009
(51) Int. Cl.: F16H 61/14, F16H 59/18

(54) **VERFAHREN ZUM BETÄTIGEN EINER KUPPLUNG EINES HYDRODYNAMISCHEN DREHMOMENTWANDLERS**
METHOD FOR ACTUATING A CLUTCH OF A HYDRODYNAMIC TORQUE CONVERTER
PROCÉDÉ D'ACTIONNEMENT D'UN EMBRAYAGE D'UN CONVERTISSEUR DE COUPLE HYDRODYNAMIQUE

(30) Priorität: 23.10.2008 DE 102008043105
(43) Veröffentlichungstag der Anmeldung: 29.06.2011
(73) Patentinhaber: ZF Friedrichshafen AG, 88038 Friedrichshafen (DE)
(72) Erfinder: HÖFLER, Hans, 88090 Immenstaad (DE); KURZ, Thomas, 88085 Langenargen (DE)
(86) Internationale Anmeldenummer: PCT/EP2009/062597
(87) Internationale Veröffentlichungsnummer: WO 2010/046208

(56) Entgegenhaltungen:
- EP-A- 0 907 043
- DE-A1- 3 517 381
- DE-A1- 19 820 047
- DE-A1- 19 925 414
- US-A- 4 835 694
- US-A- 5 681 238
- US-A1- 2007 149 354
- US-A1- 2008 234 906

## Beschreibung

Die Erfindung bezieht sich auf ein Verfahren zum Betätigen einer Kupplung eines hydrodynamischen Drehmomentwandlers nach der im Oberbegriff von Anspruch 1 näher definierten Art.

Gattungsgemäße Kupplungen in Drehmomentwandlern werden im Schließsinne betätigt, um den Antrieb mit dem Abtrieb des Drehmomentwandlers zu verbinden, wodurch ein direkter Durchtrieb vom Antrieb zum Abtrieb stattfindet, was eine Wirkungsgradverbesserung zur Folge hat. Häufig werden diese Kupplungen im Schließsinne betätigt, wenn das Turbinendrehmoment zum Pumpendrehmoment bei geschlossener oder offener Kupplung gleich groß ist. Diese Schaltpunkte werden durch die Differenzdrehzahl zwischen dem Pumpenrad und dem Turbinenrad des hydrodynamischen Drehmomentwandlers ermittelt.

Die DE 35 17 381 C2 beschreibt eine Verriegelungssteuerung für den Drehmomentwandler eines Automatikgetriebes mit mehrstufigem Schaltgetriebe, bei welchem eine Überbrückungskupplung für den hydrodynamischen Drehmomentwandler vorgesehen ist, wobei bei jedem Gangwechsel während des Hochschaltens die Überbrückungskupplung erst wieder eingerückt wird, wenn die Drehzahl am Ausgang des Drehmomentwandlers bei ausgerückter Überbrückungskupplung um eine vorgegebene Drehzahldifferenz abgenommen hat.

Die US 5 681 238 A offenbart ein gattungsgemäßes Verfahren nach dem Oberbegriff des Hauptanspruchs.

Der vorliegenden Erfindung liegt die Aufgabe zugrunde, ein Verfahren zum Betätigen einer Kupplung eines hydrodynamischen Drehmomentwandlers zu schaffen, welches die Betriebssicherheit des Fahrzeugs sowie den Fahrkomfort weiter verbessert.

Die Aufgabe wird mit einem Verfahren nach Anspruch 1 bzw. nach Anspruch 2 gelöst.

Erfindungsgemäß schließt deshalb die Kupplung nur dann, wenn ein definierter Pedalweg des Pedals zur Ermittlung der Wunschgeschwindigkeit des Fahrzeugs, beispielsweise des Gaspedals, überschritten ist und die Schließdrehzahlen am Antrieb und am Abtrieb des hydrodynamischen Drehmomentwandlers erreicht sind. Das Betätigen der Kupplung im Öffnungssinne wird unabhängig vom Pedalweg durchgeführt. Die Grenzwerte der Pedalposition werden für jeden Gang des Unterseizungsgetriebes separat definiert.

Die Schließdrehzahl wird ermittelt, indem die Drehzahl des Antriebs und die Drehzahl des Abtriebs detektiert werden und die Differenzdrehzahl vermittelt wird. Bei Erreichen einer zuvor definierten Differenzdrehzahl ist das Kriterium für die Schließdrehzahl erfüllt.

Es besteht die Möglichkeit, noch weitere Einflußgrößen, wie beispielsweise Drehzahlen der Turbine und der Pumpe oder Drücke bei einem weiteren hydraulischen Verbraucher, mit zu berücksichtigen, um die Kupplung im Schließsinne zu betätigen.

Würde die Kupplung ausschließlich durch die Zustandsgröße Turbinendrehmoment bei offener bzw. geschlossener Kupplung betätigt bzw. wird die Kupplung ausschließlich dann im Schließsinne betätigt, wenn das Turbinendrehmoment zwischen geschlossener und offener Kupplung gleich groß ist, wobei hierfür die Schaltpunkte durch die Drehzahldifferenz zwischen der Turbine und der Pumpe des hydrodynamischen Drehmomentwandlers ermittelt wird, so besteht die Möglichkeit, dass bei den unteren Gängen bzw. Fahrgeschwindigkeiten in einer Arbeitsmaschine bis zum Bereich von beispielsweise 12 km/h ein deutlich unterschiedliches Fahrverhalten mit geschlossener bzw. offener Kupplung vorhanden ist.

In einer weiteren Ausgestaltungsform der Erfindung wird die Pedalposition über einen Drehwinkelsensor erfaßt, wobei das Signal direkt oder über einen CAN-Bus an die Fahrzeugelektronik und von dort an die Getriebeelektronik übermittelt wird.

Es besteht die Möglichkeit, das Verfahren zum Betätigen der Kupplung des hydrodynamischen Drehmomentwandlers in einer Arbeitsmaschine, beispielsweise einem Radlader, zu verwenden, bei welchem durch die Verwendung des Verfahrens auch bei den unteren Gängen bzw. Fahrgeschwindigkeiten bis ca. 12 km/h und kurzen Ladezyklen gleichbleibende Fahrverhalten erreicht werden.

## Patentansprüche

1. Verfahren zum Betätigen einer Kupplung eines hydrodynamischen Drehmomentwandlers in einem Fahrzeug, wobei die Kupplung beim Betätigen im Schließsinne den Antrieb des hydrodynamischen Drehmomentwandlers mit dem Abtrieb des hydrodynamischen Drehmomentwandlers verbindet, wobei eine Stellung eines Pedals zur Ermittlung der Wunschgeschwindigkeit des Fahrzeugs detektiert und mit einer zuvor definierten Stellung des Pedals verglichen wird, und bei Überschreiten der zuvor definierten Stellung die Kupplung im Schließsinne betätigt wird, **dadurch gekennzeichnet, dass** die Kupplung bei überschrittener Stellung des Pedals im Öffnungssinne betätigt bleibt, wenn eine zuvor definierte Drehzahldifferenz zwischen dem Antrieb des hydrodynamischen Drehmomentwandlers und dem Abtrieb des hydrodynamischen Drehmomentwandlers überschritten ist

2. Verfahren zum Betätigen einer Kupplung eines hydrodynamischen Drehmomentwandlers in einem Fahrzeug, wobei die Kupplung beim Betätigen im Schließsinne den Antrieb des hydrodynamischen Drehmomentwandlers mit dem Abtrieb des hydrodynamischen Drehmomentwandlers verbindet, wobei eine Stellung eines Pedals zur Ermittlung der Wunschgeschwindigkeit des Fahrzeugs detektiert und mit einer zuvor definierten Stellung des Pedals verglichen wird, und bei Überschreiten der zuvor definierten Stellung die Kupplung im Schließsinne betätigt wird, **dadurch gekennzeichnet, dass** die Kupplung im Öffnungssinne betätigt wird, wenn das Drehmoment am Antrieb des hydrodynamischen Drehmmnentwandlers bei geschlossener und bei geöffneter Kupplung gleich ist.

## Claims

1. Method for actuating a clutch of a hydrodynamic torque converter in a vehicle, wherein the clutch, when actuated in the closing sense, connects the drive input of the hydrodynamic torque converter to the drive output of the hydrodynamic torque converter, wherein a position of a pedal for determining the desired speed of the vehicle is detected and compared with a predefined position of the pedal, and if the predefined position is overshot, the clutch is actuated in the closing sense, **characterized in that**, in the case of the position of the pedal being overshot, the clutch remains actuated in the opening sense if a predefined rotational speed difference between the drive input of the hydrodynamic torque converter and the drive output of the hydrodynamic torque converter is exceeded.

2. Method for actuating a clutch of a hydrodynamic torque converter in a vehicle, wherein the clutch, when actuated in the closing sense, connects the drive input of the hydrodynamic torque converter to the drive output of the hydrodynamic torque converter, wherein a position of a pedal for determining the desired speed of the vehicle is detected and compared with a predefined position of the pedal, and if the predefined position is overshot, the clutch is actuated in the closing sense, **characterized in that** the clutch is actuated in the opening sense if the torque at the drive input of the hydrodynamic torque converter is the same when the clutch is closed and when the clutch is open.

## Revendications

1. Procédé d'actionnement d'un embrayage d'un convertisseur de couple hydrodynamique dans un véhicule, dans lequel l'embrayage, lors de l'actionnement dans le sens de fermeture, relie l'entraînement du convertisseur de couple hydrodynamique à la sortie du convertisseur de couple hydrodynamique, une position d'une pédale pour déterminer la vitesse souhaitée du véhicule étant détectée et étant comparée avec une position de la pédale définie préalablement, et en cas de dépassement de la position définie préalablement, l'embrayage étant actionné dans le sens de fermeture, **caractérisé en ce que** l'embrayage, en cas de position de la pédale dépassée, reste actionné dans le sens de l'ouverture si une différence de régime définie préalablement entre l'entraînement du convertisseur de couple hydrodynamique et la sortie du convertisseur de couple hydrodynamique est dépassée.

2. Procédé d'actionnement d'un embrayage d'un convertisseur de couple hydrodynamique dans un véhicule, dans lequel l'embrayage, lors de l'actionnement dans le sens de fermeture, relie l'entraînement du convertisseur de couple hydrodynamique à la sortie du convertisseur de couple hydrodynamique, une position d'une pédale pour déterminer la vitesse souhaitée du véhicule étant détectée et étant comparée avec une position de la pédale définie préalablement, et en cas de dépassement de la position définie préalablement, l'embrayage étant actionné dans le sens de fermeture, **caractérisé en ce que** l'embrayage est actionné dans le sens de l'ouverture lorsque le couple au niveau de l'entraînement du convertisseur de couple hydrodynamique est identique lorsque l'embrayage est fermé et lorsqu'il est ouvert.
